# FASCICULE DE BREVET EUROPEEN

(11) **EP 1 329 729 B1**
(45) Date de publication et mention de la délivrance du brevet: **06.04.2011**
(21) Numéro de dépôt: 03354001.4
(22) Date de dépôt: 17.01.2003
(51) Int. Cl.: G01P 3/50, G01P 3/68, G01P 3/80, G01P 3/38, A63C 5/06, A63C 11/00

(54) **Système de détermination de la vitesse d'un ski**
System zur Bestimmung der Geschwindigkeit eines Skis
Ski speed determining system

(30) Priorité: 18.01.2002 FR 0200631
(43) Date de publication de la demande: 23.07.2003
(73) Titulaire: Kirby, Richard, 38410 Saint Martin d'Uriage (FR)
(72) Inventeur: Kirby, Richard, 38410 Saint Martin d'Uriage (FR)
(74) Mandataire: de Beaumont, Michel

(56) Documents cités:
- DE-A- 10 014 253
- DE-A- 19 518 638
- DE-A- 19 524 842
- DE-A- 19 725 904
- FR-A- 2 609 174

## Description

La présente invention concerne la mesure de vitesse d'un mobile glissant sur une surface glacée, telle que de la neige, de la glace ou analogue. Elle s'applique à la mesure de la vitesse d'un ski, d'un patin à glace, d'une luge, d'un bobsleigh, d'un surf ou analogue.

Une première catégorie de dispositifs de mesure de vitesse comprend des dispositifs nécessitant un équipement externe préalablement installé. L'équipement externe peut être par exemple un radar, une caméra ou une installation à photocellules. Une telle installation, plus connue dans le domaine du ski, permet de connaître la vitesse moyenne d'un skieur entre deux portiques sur lesquels sont fixées des photocellules de détection de passage.

Il existe également des dispositifs de mesure de vitesse qui utilisent un moyen de positionnement par triangulation tel qu'un GPS (système de positionnement mondial). Le positionnement donné est juste à quelques mètres près et l'altitude indiquée est très peu fiable. Ces systèmes ne sont pas adaptés au calcul de la vitesse d'un skieur sur des distances relativement courtes. De plus, le temps d'acquisition de la position est relativement long et le système peut être occulté par le relief.

Les dispositifs de cette première catégorie nécessitent un équipement externe en général coûteux qui doit être installé par avance.

Une seconde catégorie de dispositifs de mesure de vitesse comprend des dispositifs ne nécessitant pas d'infrastructure externe ; ils sont autonomes. Parmi ces dispositifs, on peut citer le compteur de tours de roue par minute qui permet d'obtenir la vitesse d'un cycle ou d'une voiture. Pour un coureur il existe le podomètre. La distance entre les deux pieds du coureur est proportionnelle à l'angle formé par les deux jambes. Par sommation de ces distances on obtient la vitesse du coureur. Contrairement au cycliste et au coureur, le skieur n'a pas d'éléments effectuant un mouvement répétitif permettant de mesurer la vitesse de façon similaire.

Il existe d'autres dispositifs de mesure de vitesse autonomes utilisant les informations données par un ou plusieurs accéléromètres. Les valeurs d'accélération relevées permettent de définir la variation de vitesse entre deux instants. Les dispositifs nécessitent des calculs relativement complexes. De plus, la détermination d'une vitesse instantanée nécessite la connaissance de l'historique du déplacement depuis son point de départ. Toute erreur est donc cumulative. De plus, ces dispositifs sont mal adaptés à la mesure de la vitesse d'un ski soumis à des chocs et à des vibrations.

Le brevet allemand DE 195 24 842 décrit un dispositif de mesure de vitesse d'un ski. Le dispositif de mesure comprend une source lumineuse éclairant la surface de la neige défilant sous une ouverture formée dans le ski. Deux capteurs placés dans l'ouverture reçoivent les signaux lumineux réfléchis par deux zones distinctes de la surface éclairée. La surface de la neige défilant sous le ski ayant une structure irrégulière, l'intensité lumineuse du signal reçu par chaque capteur fluctue. Les deux capteurs sont placés l'un derrière l'autre dans l'axe du ski de sorte que la forme des signaux reçus par chacun des capteurs est sensiblement identique mais décalée temporellement. Le décalage entre les signaux varie en fonction de la vitesse du ski, plus le ski va vite plus le décalage est faible et inversement. Des moyens d'analyse fixés sur le ski déterminent grâce à des méthodes de corrélation le décalage temporel entre les signaux reçus par chacun des capteurs. Connaissant l'écartement entre les deux capteurs, le dispositif calcule la vitesse longitudinale instantanée qui est le rapport entre l'écartement et le décalage. Le brevet n'indique pas comment traiter des situations de dérapage. Or des situations de dérapage sont très fréquentes lors d'un déplacement à ski et la détection de la vitesse est particulièrement importante dans de telles situations. De plus, le dispositif du brevet allemand ne fonctionne plus quand le ski est incliné et décollé de la surface de la neige et que des particules de neige sont projetées. La surface de neige cachée par les particules de neige projetées n'est plus visible des capteurs. Le brevet allemand DE 100 14 2532 décrit également un dispositif de mesure de vitesse d'un ski présentant les mêmes inconvénients.

Un objet de la présente invention est de prévoir un système autonome simple de mesure de la vitesse longitudinale et transversale d'un ski capable de mesurer la vitesse longitudinale dans l'axe du ski même dans des situations de dérapage et capable de mesurer la vitesse du ski quelle que soit son inclinaison.

Un autre objet de la présente invention est de prévoir un tel système autonome capable de détecter un dérapage du ski.

Pour atteindre ces objets, la présente invention prévoit un système de mesure de la vitesse d'un ski tel que revendiqué.

La présente invention s'appuie sur la constatation selon laquelle toute surface élémentaire de neige ou de glace est spécifique en ce qui concerne ses caractéristiques optiques et qu'il est possible d'en faire l'image. De plus, l'inventeur a constaté qu'il est possible aussi de faire l'image d'un ensemble de particules de neige en suspension et que chaque ensemble de particules présente des caractéristiques optiques spécifiques. En conséquence, que le ski soit en contact avec la surface de la neige ou décollé de celle-ci, il est possible de prendre des images successives de la surface de la neige ou des particules de neige en suspension. Dans la mesure où les images prises par un capteur comportent une portion d'image commune, cette portion d'image commune pourra être identifiée et le vecteur déplacement du ski pourra être calculé.

Les vecteurs de déplacement sont communiqués à un dispositif de calcul de vitesse lui-même relié à un dispositif d'affichage ou d'alarme. Les dispositifs de mesure de déplacement, de calcul des composantes longitudinale et transversale de la vitesse et les dispositifs d'affichage ou d'alarme peuvent être regroupés au niveau du ski ou être répartis entre le ski, un objet lié au skieur, et/ou une station éloignée, des moyens de communication appropriés permettant d'assurer la liaison entre ces divers dispositifs.

Au niveau de la station éloignée, on pourra mémoriser l'ensemble des vecteurs de déplacement et les valeurs de vitesse afin de réaliser ultérieurement diverses analyses de trajectoires intéressantes pour le skieur ou ses entraîneurs.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente un ski sur lequel est inséré un dispositif de mesure de déplacement ;
la figure 2 est une vue en coupe partielle d'un ski incorporant un dispositif de mesure de déplacement ;
les figures 3A et 3B représentent deux images successives obtenues avec un dispositif selon l'invention ;
la figure 4 est un schéma sous forme de blocs du système de mesure de vitesse ;
la figure 5 est une vue en coupe d'un ski incorporant deux dispositifs de mesure de déplacement selon la présente invention ; et
les figures 6A à 6C sont des diagrammes temporels des vitesses longitudinale et transversale fournies par les dispositifs de mesure de la figure 5.

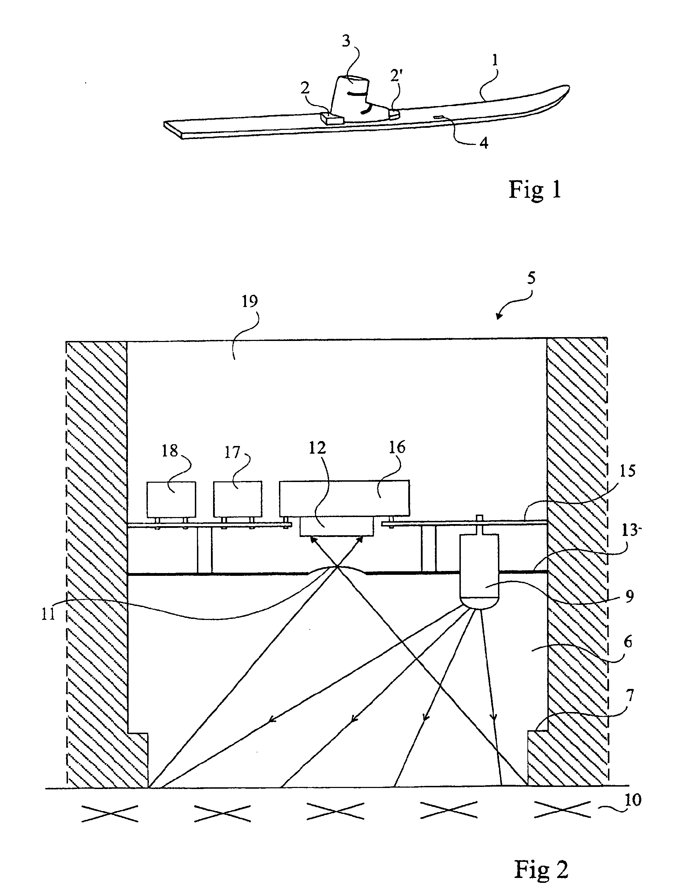

La figure 1 représente un ski 1 sur lequel sont placées des fixations 2 et 2' destinées à maintenir une chaussure 3. Dans une cavité 4 du ski 1 est inséré un dispositif de mesure de déplacement du type décrit ci-après.
La figure 2 est une vue en coupe du ski 1 au niveau de la cavité 4 dans laquelle est inséré un dispositif de mesure de déplacement 5. La cavité 4 définit, sous le ski, une fenêtre d'observation 10 au niveau de laquelle une portion de la neige présente sous le ski est visible. Le dispositif de mesure de déplacement 5 comprend des moyens pour éclairer cette fenêtre 10, des moyens pour faire l'image de cette fenêtre, et des moyens pour traiter cette image.

Un bloc 6 d'un matériau transparent, par exemple du verre, est inséré dans la cavité 4. Cette cavité et le bloc comprennent par exemple des épaulements complémentaires 7 destinés à permettre un positionnement précis du bloc de façon que sa surface inférieure vienne exactement à l'aplomb de la surface inférieure du ski. Le bloc 6 pourra avoir, en vue de dessus, une forme carrée et présenter par exemple des dimensions de l'ordre de 10*10 mm. Le matériau du bloc transparent 6 sera choisi pour que sa surface inférieure soit suffisamment résistante. Elle sera éven-tuellement traitée spécifiquement à cet effet. Vu la dimension très réduite du bloc 6, la solidité du ski et son bon glissement sur la neige ne sont pas affectés. En cas de défaillances techniques, le bloc 6 pourra être retiré de la cavité 4 et remplacé par un nouveau bloc. De plus, on pourra choisir de retirer le bloc 6 lors du fartage du ski.

Les moyens pour éclairer la fenêtre d'observation de la neige 10 sous le ski comprennent par exemple une diode électroluminescente 9 qui peut être partiellement insérée dans une ouverture ménagée du côté de la face supérieure du bloc 6. Divers moyens pourront être prévus pour assurer une certaine directivité de l'éclairement en direction de la fenêtre d'observation 10.

Du côté de la face supérieure du bloc 6 est formée une lentille 11, par exemple d'une seule pièce avec le bloc 6. La lentille permet de faire l'image de la fenêtre d'observation 10 sur un capteur d'image 12. De préférence, la surface du bloc 6 est recouverte d'une couche 13 d'un matériau opaque pour éviter l'influence de la lumière parasite sur le capteur d'image 12.

L'homme de l'art notera que les systèmes d'éclairement de la neige situés sous la fenêtre d'observation et de recueil de l'image de cette fenêtre peuvent être soumis à de nombreuses variantes. Tout moyen d'éclairement pourra être utilisé. On pourra illuminer la surface d'observation 10 avec des rayonnements autres que visibles se situant par exemple dans l'infrarouge ou l'ultraviolet. On pourra prévoir des moyens d'éclairement très sélectifs. On pourra entre autre prévoir un système d'éclairement directionnel permettant d'assurer que l'angle d'incidence des rayons émis par la source soit identique en tout point de la fenêtre d'observation afin que l'image d'une même zone de surface ait une image strictement identique quelle que soit sa position dans la fenêtre d'observation. Au lieu d'utiliser un bloc de matériau transparent inséré dans la cavité, on pourra prévoir une plaque transparente du côté de la face inférieure du ski, bouchant la cavité, et une plaque sensiblement au milieu de la cavité portant une lentille, un espace vide étant ménagé entre ces deux plaques et étant éventuellement associé à des moyens d'orientation et de recueil de la lumière.

Dans le mode de réalisation illustré, le bloc 6 a une hauteur inférieure à l'épaisseur du ski. Cependant le bloc 6 pourrait tout aussi bien avoir une hauteur égale ou supérieure à l'épaisseur du ski en fonction notamment du dispositif optique choisi.

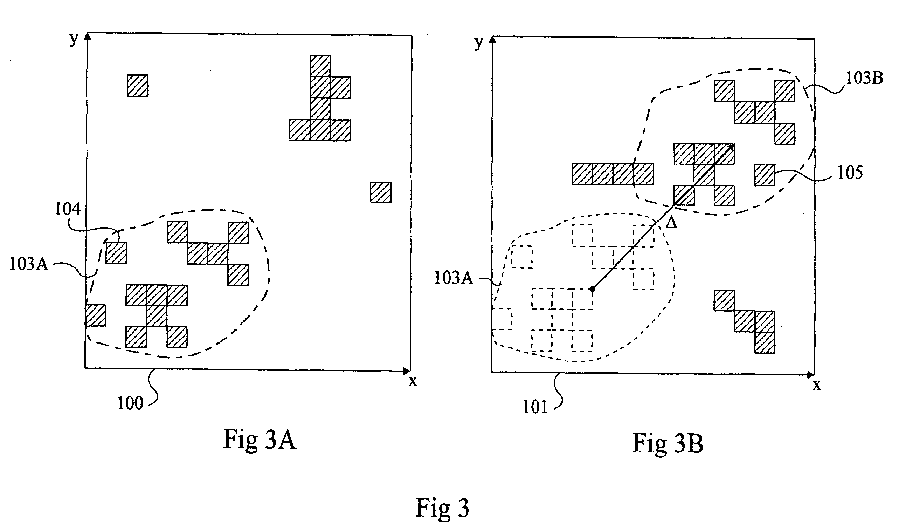

Dans la partie supérieure de la cavité, non occupée par le système d'éclairement et de prise d'image, sont disposés des circuits optoélectroniques comprenant notamment le capteur 12 susmentionné. Ce capteur est associé à des circuits électroniques permettant de prendre des images de la neige située sous la fenêtre d'observation 10, à des intervalles réguliers, et à une fréquence suffisamment élevée compatible avec la vitesse maximum possible du skieur. Il est également prévu d'utiliser un dispositif permettant de mémoriser des images successives, et de les comparer pour déterminer le vecteur déplacement entre deux images successives, comme cela sera exposé ci-après en relation avec la figure 3. A partir de la mesure du vecteur déplacement, connaissant l'intervalle de temps entre deux images successives, on pourra déterminer un vecteur vitesse, c'est-à-dire la vitesse absolue, sa composante longitudinale et sa composante transversale.

Dans le mode de réalisation illustré, on prévoit de calculer au niveau du ski uniquement le vecteur déplacement, et de transmettre ce vecteur déplacement vers des moyens de calcul et d'affichage de la vitesse distants. Ainsi, par exemple, on placera sur une carte de circuit imprimé 15 un composant 16 de calcul de vecteurs de déplacement associé au capteur d'image 12, un composant 17 d'émission de chaque vecteur déplacement calculé relié au composant 16 par des connexions prévues sur le circuit imprimé. On pourra également prévoir un dispositif d'alimentation 18, par exemple une pile ou un accumulateur rechargeable. L'ensemble des composants électroniques prévus du côté de la partie supérieure de la cavité 4 peut être noyé dans une résine 19. Pour que le dispositif d'alimentation reste efficace au cours du temps, on prévoira, s'il s'agit d'une pile, une ouverture dans la résine pour permettre de remplacer la pile, et, s'il s'agit d'un accumulateur rechargeable, des bornes pouvant être connectées à un dispositif d'alimentation externe.

Le capteur d'image 12 et le composant 16 de calcul de vecteurs de déplacement sont de préférence réalisés sous forme de composant monolithique. Aucun composant existant correspondant n'existe pour permettre de faire des images nettes d'une surface de neige en contact avec le ski ou d'un ensemble de particules de neige en suspension éloignées du ski de quelques centimètres et pour permettre de mesurer des vitesses allant jusqu'à 100 km/h. Toutefois, l'inventeur propose d'utiliser le composant ADNS-2051 commercialisé par la société AGILENT, en le modifiant. On modifie d'une part son système optique afin d'obtenir une plus grande profondeur de champ qui permette d'avoir des images nettes et d'autre part on augmente sa fréquence de prise d'images pour détecter des déplacements rapides. Le composant fonctionne à des fréquences supérieures à 10 MHz et fournit en sortie, après chaque intervalle de mesure, un flux de bits série codant les deux composantes du vecteur déplacement.

Les figures 3A et 3B représentent deux images successives 100 et 101 de la surface de la neige prises par le capteur d'image 12. Par souci de clarté, seuls des pixels noirs ou blancs ont été représentés mais le capteur d'image 12 peut détecter une multitude de niveaux de gris. Sur chacune des images 100 et 101, on a indiqué des axes x et y, l'axe x correspondant à la direction longitudinale du ski et l'axe y correspondant à la direction transversale du ski. Comme on l'a indiqué précédemment, chaque image d'une surface de neige présente des caractéristiques spécifiques. On a indiqué en figure 3A, entouré d'un trait d'axe 103A un tel motif spécifique apparaissant dans l'image 100. On a également indiqué en figure 3B ce même motif apparaissant dans l'image 101 désigné par la référence 103B. En raison du déplacement du ski entre les deux prises d'images, alors que le motif 103A était en bas à gauche de l'image 100, le motif 103B est en haut à droite de l'image 101. On notera également qu'il peut apparaître divers artefacts, par exemple tels que désignés par la référence 104 dans le motif 103A et par la référence 105 dans le motif 103B.

On a également reproduit sur la figure 3B, le motif 103A en pointillés. On voit que le déplacement du motif 103 d'une image à l'autre se caractérise par un vecteur déplacement Δ, de composantes Δₓ et Δ_{y}. Un composant 16 de calcul de vecteurs de déplacement permet de traiter les images 100 et 101 pour déterminer ce vecteur Δ sans tenir compte des divers artefacts. Un tel composant ne sera pas décrit en détail. Un mode de détermination du vecteur Δ est celui mis en oeuvre par le composant ADNS-2051 susmentionné.

Les vecteurs de déplacement calculés par le dispositif de mesure de déplacement 5 sont envoyés à des moyens de calcul et d'affichage de la vitesse 20. Les moyens 20 peuvent être groupés ou séparés, être fixés sur le ski, portés par le skieur ou être placés dans une station de traitement à distance.

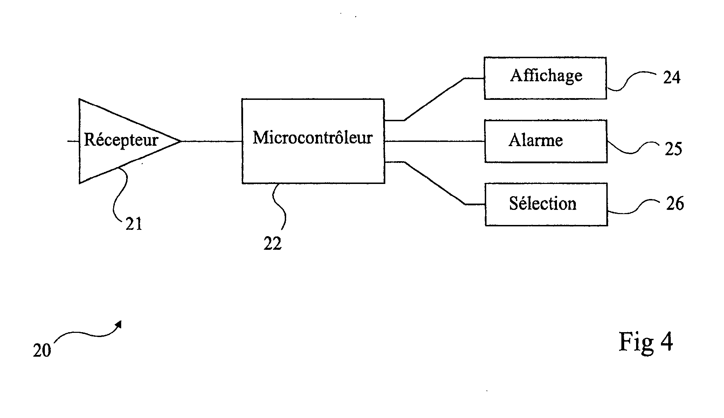

Comme cela est illustré en figure 4, les moyens 20 comportent un récepteur 21 qui reçoit les données de déplacement envoyées par l'émetteur 17 du dispositif de mesure de déplacement 5. Les données de déplacement sont alors transmises à un microcontrôleur 22 qui calcule la vitesse absolue du skieur, ainsi que la vitesse longitudinale et la vitesse transversale. Le microcontrôleur est relié à un dispositif d'affichage 24 et éventuellement à un dispositif d'alarme 25. De plus, on pourra prévoir un dispositif d'éclairage du dispositif d'affichage ainsi que des moyens de sélection 26 permettant d'activer ou de désactiver les différentes fonctions du dispositif 20.

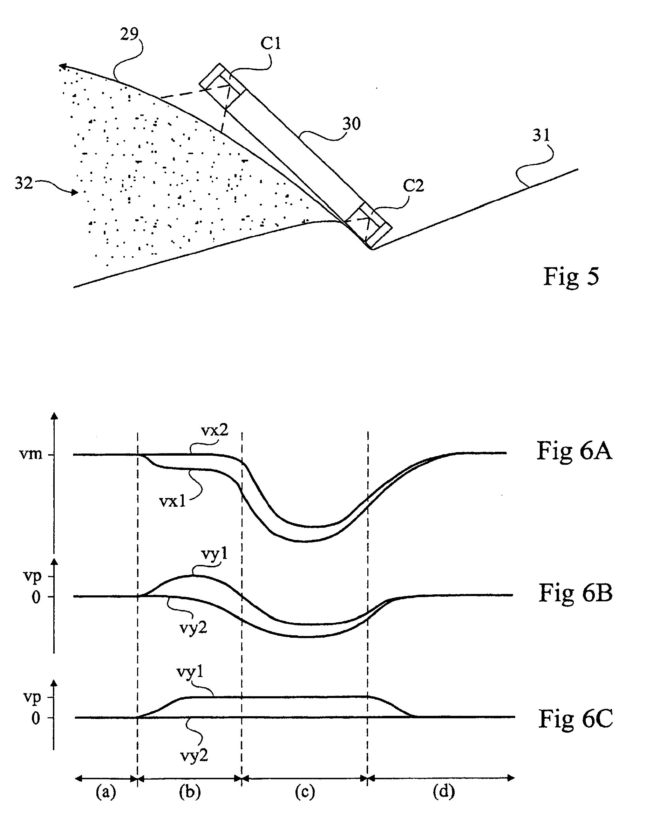

Quand le ski est incliné, des particules de neige sont projetées sous le ski, comme cela et illustré en figure 5. Quand un seul dispositif de mesure est placé sur le ski, en général au centre, une grande partie des images prises par le capteur du dispositif de mesure sont des images de particules de neige en suspension. Les particules ayant une vitesse non nulle par rapport à la surface de la neige, la vitesse relevée par les capteurs peut être faussée. Néanmoins, l'inventeur a constaté que les particules de neige étaient projetées perpendiculairement à l'axe du ski et donc que seule la composante transversale de la vitesse, la vitesse de dérapage, était légèrement faussée. La vitesse longitudinale mesurée est quant à elle parfaitement correcte.

L'inventeur a toutefois noté une légère imprécision sur la mesure de la vitesse quand un seul capteur est utilisé et que le ski est fortement incliné sans qu'il ne dérape. Dans cette configuration, les particules de neige projetées le plus haut ne passent pas le long de la semelle du ski mais suivent une trajectoire, représentée par la courbe 29 en figure 5, qui part de la carre en contact avec la neige et qui est de plus en plus écartée de la semelle du ski en allant vers l'autre carre. Cette trajectoire délimite une surface "supérieure" des particules projetées sous le ski, la surface supérieure étant perpendiculaire au plan de coupe de la figure 5. Plus la surface supérieure est éloignée du ski, plus la portion de surface dans le champ de vision du capteur du dispositif de mesure est grande. Un même déplacement du ski apparaît alors d'autant plus petit que la portion de surface vue par le capteur est grande. Ainsi, plus la surface supérieure est éloignée du ski, plus la vitesse mesurée est faible.

L'imprécision de vitesse est néanmoins relativement faible et l'utilisation d'un seul dispositif placé au centre du ski reste tout à fait valable pour des skieurs amateurs ne souhaitant pas connaître leur vitesse avec une grande précision.

Dans le cas où l'on souhaite avoir une mesure plus précise, on pourra, selon la présente invention, comme cela est représenté en figure 5, prévoir de placer un dispositif de mesure de vitesse de chaque côté d'un ski 30. Ainsi, deux dispositifs de mesure de vitesse C1 et C2 déterminent chacun une vitesse longitudinale, respectivement vx1 et vx2, et une vitesse transversale, respectivement vy1 et vy2. Dans l'exemple de la figure 5, le ski 30 est fortement incliné par rapport à la surface de neige, le dispositif C2 est positionné près de la carre en contact avec la surface 31 de la neige. Dans l'exemple de la figure 5, la neige est "molle", non gelée, et la surface de la neige est creusée sous la carre du ski. Le dispositif C2 est en contact avec la surface de la neige. Le dispositif C1 proche de la carre soulevée est relativement éloigné de la surface "supérieure" de l'ensemble des particules de neige en suspension 32.

La figure 5 illustre un exemple de configuration possible de positionnement du ski par rapport à la surface de la neige. Il existe plusieurs configurations possibles selon que la neige est "molle" ou dure, que le ski est à plat, légèrement incliné ou fortement incliné, et que le ski dérape ou non. On va maintenant considérer les différentes configurations possibles du ski par rapport à la surface de la neige.
- Dans les configurations où le ski est à plat sur la surface de la neige, que la neige soit dure ou molle et que le ski dérape ou non, les deux capteurs C1 et C2 indiquent les mêmes vitesses longitudinale et transversale (vx1=vx2 et vy1=vy2).
- Dans la configuration, représentée en figure 5, où le ski est fortement incliné, où la neige est molle et où le ski ne dérape pas, le dispositif C2 en contact avec la surface de la neige relève une vitesse longitudinale vx2 exacte et une vitesse transversale vy2 nulle. Le dispositif C1 relève une vitesse longitudinale vx1 légèrement plus faible que la vitesse longitudinale vx2 car le dispositif C1 est éloigné de la surface supérieure des particules de neige en suspension. Le dispositif C1 relève une vitesse de dérapage vx1 non nulle qui correspond en fait à la vitesse de déplacement des particules de neige projetées.
- Dans la configuration, non représentée, où le ski est légèrement incliné, où la neige est molle et où le ski ne dérape pas, les particules de neige en suspension sont en contact avec la semelle du ski sur toute sa largeur. Les vitesses longitudinales relevées par les deux dispositifs C1 et C2 sont identiques (vx1 = vx2). Par contre, les vitesses transversales relevées diffèrent, la vitesse transversale relevée par le dispositif C2 est nulle et celle relevée par le dispositif C1, la vitesse vy1, est égale à la vitesse des particules de neige projetées.

- Dans la configuration où le ski est incliné sans déraper et où la neige est dure, le ski ne s'enfonce pas dans la neige et le dispositif C2 est décollé de la surface de la neige. La vitesse transversale vx2 relevée par le dispositif C2 est non nulle bien que le ski ne dérape pas, elle correspond à la vitesse des particules de neige en suspension. La vitesse transversale vx1 relevée par le dispositif C1 est inférieure ou égale à celle relevée par le dispositif C2, la vitesse vy2, selon que les particules de neige passent respectivement loin ou près du dispositif C1. Bien que décollé, le dispositif C2 est relativement proche de la surface de la neige et les particules de neige sont en contact avec le dispositif C2. La vitesse longitudinale vx2 relevée par le dispositif C2 est exacte, la vitesse relevée par le dispositif C1 est plus ou moins faible que celle relevée par le dispositif C2 selon l'inclinaison du ski.
- Dans la configuration où le ski est incliné et dérape, que la neige soit dure ou molle, le ski "rattrape" les particules de neige projetées et la surface supérieure des particules est en contact avec la semelle du ski sur toute sa largeur. Les vitesses longitudinales relevées par les dispositifs C1 et C2 sont identiques et exactes (vx1 = vx2). Dans le cas où la neige est dure, les deux dispositifs étant décollés de la neige, les vitesses transversales relevées par les dispositifs C1 et C2 sont identiques (vy1 et vy2) et égales à la vitesse des particules de neige. Dans le cas où la vitesse est nulle, le dispositif C2 est en contact avec la neige, les vitesses transversales relevées diffèrent (vy1 ≠ vy2).

En conclusion, quelle que soit la configuration, la vitesse longitudinale exacte est toujours celle donnée par le ou les dispositifs indiquant la vitesse longitudinale la plus élevée.

Afin d'indiquer la vitesse longitudinale du ski, des moyens d'analyse, non représentés, placés sur le ski ou à distance, reçoivent les vitesses longitudinales vx1 et vx2 déterminées par chacun des dispositifs C1 et C2. Les moyens d'analyse indiquent la vitesse longitudinale exacte en identifiant parmi les vitesses longitudinales vx1 et vx2 quelle est la vitesse la plus élevée.

Les vitesses transversales relevées par les deux capteurs peuvent permettre de connaître la vitesse de dérapage effective à un moment donné en effectuant une analyse temporelle des vitesses mesurées. L'inventeur s'est tout particulièrement intéressé à l'analyse temporelle des vitesses lorsqu'un skieur effectue un virage. Il s'est notamment intéressé au cas où le skieur effectue un virage sur une pente pas trop raide en cherchant à ne pas déraper pour perdre un minimum de vitesse. L'inventeur prévoit de mettre en oeuvre sur un microprocesseur un programme d'analyse temporelle des vitesses mesurées qui permette notamment d'alerter le skieur quand celui-ci dérape trop lorsqu'il effectue un virage.

La figure 6A est un diagramme temporel des vitesses longitudinales vx1 et vx2 déterminées par les deux dispositifs C1 et C2 d'un des skis lorsque le skieur effectue un virage. Avant d'effectuer un virage, phase (a), les skis sont généralement à plat et le skieur ne dérape pas. Les vitesses vx1 et vx2 sont identiques et égales à vm. Juste avant de tourner, phase (b), le skieur se met sur les carres sans déraper. La vitesse vx1 du dispositif C1 placé proche de la carre soulevée est légèrement inférieure à la vitesse vx2. Pendant le virage, phase (c), le skieur perd de la vitesse et il en perd d'autant plus qu'il dérape. Dans tous les cas, les deux vitesses vx1 et vx2 chutent pendant la phase (c), le décalage entre vx1 et vx2 fluctuant en fonction du dérapage et de l'inclinaison du ski. Dans l'exemple de la figure 6A, le ski reste incliné et le skieur ne dérape quasiment pas. Sur la fin du virage, phase (d), le ski se remet progressivement à plat et les deux vitesses vx1 et vx2 s'égalisent.

Les figures 6B et 6C sont deux diagrammes temporels possibles des vitesses transversales vy1 et vy2 déterminées par les deux dispositifs C1 et C2. Avant d'effectuer le virage, phase (a), le skieur ne dérape pas et les vitesses transversales sont nulles. Au moment où le skieur incline ses skis sans déraper, phase (b), l'un des dispositifs, le dispositif C1 dans cet exemple, détecte une vitesse non nulle égale à la vitesse des particules de neige projetées vp (vy1=vp et vy2=0). Durant le virage, phase (c), la forme du diagramme des vitesses varie selon que le skieur dérape ou non.

Dans l'exemple de la figure 6B, le skieur dérape. La vitesse vy2 du dispositif C2 en contact avec la surface de la neige devient négative. La vitesse vy1, positive durant la phase (b), devient négative, ce qui signifie que le ski dérape plus vite que la vitesse des particules de neige en suspension.

Dans l'exemple de la figure 6C, le skieur ne dérape pas. La vitesse vy2 reste nulle et la vitesse vy1 du dispositif "décollé" reste positive et égale à la vitesse des particules de neige en suspension.

Sur la fin du virage, phase (d), le skieur remet ses skis à plat et cesse de déraper. Les vitesses vy1 et vy2 redeviennent nulles.

Afin de détecter si le skieur dérape pendant un virage, la présente invention prévoit de mettre en oeuvre un programme d'analyse qui détecte dans une première phase les moments où le skieur incline ses skis sans déraper, ce qui correspond à détecter que l'une des vitesses vx1 et vx2 devient plus faible et qu'au moins une des vitesses vy1 et vy2 devient non nulle. Une fois que le programme a détecté que le skieur a incliné ses skis, le programme détermine si le skieur tourne en regardant si les vitesses vx1 et vx2 baissent. Puis, dans le cas où le skieur tourne, le programme analyse les vitesses vy1 et vy2 afin de détecter un changement de signe. Dans le cas où le programme détecte un changement de signe, un signal d'alarme est émis afin d'indiquer au skieur qu'il dérape.

On pourra prévoir de produire un signal d'alarme avant que la vitesse transversale vy1 ne devienne négative, en détectant par exemple une diminution donnée de vy1 par rapport à la vitesse vp correspondant à la vitesse maximale enregistrée lors de l'inclinaison des skis en phase (b). La vitesse transversale peut être estimée comme étant égale à la vitesse vy1 relevée moins la vitesse vp. On pourra notamment prévoir un signal d'alarme quand la diminution donnée de vy1 dépasse un certain pourcentage de la vitesse longitudinale (vy1).

Bien entendu, l'homme de l'art saura réaliser un programme capable de détecter les différentes phases du virage et capable de signaler un dérapage trop important quelle que soit le sens du virage, que le dispositif C2 soit proche de la carre en contact avec la neige ou proche de la carre soulevée, et inversement pour le dispositif C1.

Un avantage de placer deux systèmes de mesure de la vitesse de chaque côté d'un ski est qu'il est possible de déterminer la vitesse de dérapage d'un ski.

De plus, il est possible que la neige présente des inégalités de surface telles que des trous ou des rayures susceptibles de produire des petites séquences d'images totalement noires (ou totalement blanches). La vitesse calculée à partir de telles séquences est nulle bien que le ski se déplace. Cependant les trous à l'origine de telles erreurs de mesure sont de petites tailles et les erreurs apparaissent sur de très courtes périodes. On pourra ainsi prévoir un programme d'indication de la vitesse longitudinale qui indique comme vitesse longitudinale la vitesse longitudinale maximale parmi les n dernières mesures de vitesse effectuées par chacun des dispositifs de mesure placés sur le ski, n pouvant par exemple être égal à vingt.

De plus, on pourra prévoir de mémoriser les données de vitesse et de déplacement afin de pouvoir réaliser ultérieurement différentes analyses. Des dispositifs d'analyse permettent de visualiser la trajectoire du skieur et de connaître la vitesse en tout point de la trajectoire.

Les dispositifs d'analyse et d'affichage peuvent être de petite taille. Ils pourront être incorporés au ski. Ils pourront être placés dans un dispositif portable lié au skieur, par exemple à la manière d'un bracelet-montre. Si l'on estime que le skieur ne peut pas distraire son attention pour observer un affichage, on pourra prévoir uniquement, ou en outre, des alarmes sonores ou des moyens de fourniture d'informations parlées.

Plusieurs dispositifs d'analyse peuvent être associés à une ou plusieurs mesures de déplacement, par exemple un dispositif sur un appareil portable lié au skieur et un autre dispositif dans une station à distance. La connaissance immédiate d'une trop grande perte de vitesse ou d'un dérapage trop important permet que le skieur s'auto-analyse instantanément. Il peut ainsi aisément percevoir quels sont les mouvements qui le ralentissent. En parallèle, l'entraîneur peut disposer d'un dispositif qui reçoit en continu les données de déplacement. L'entraîneur peut ainsi analyser la descente du skieur dans son ensemble et déterminer quels sont les endroits où le skieur a perdu de la vitesse. Une analyse précise de la courbure d'un virage peut permettre d'identifier la phase du virage responsable du freinage et le mouvement du skieur correspondant. Cette possibilité d'analyse fine, non possible actuellement, est précieuse.

De plus, on peut prévoir de mémoriser dans un dispositif lié au ski ou au skieur les données de déplacement d'un skieur effectuant par exemple un slalom. Une fois le slalom terminé, les données mémorisées peuvent être transmises à un dispositif d'analyse puissant tel qu'un ordinateur. On pourra alors analyser les différents passages dans le slalom en comparant les différentes trajectoires et savoir quelle est la trajectoire la plus rapide.

On pourra aussi prévoir de lier un ou plusieurs systèmes de mesure de vitesse selon la présente invention à chacun des deux skis de façon à obtenir une mesure de vitesse pour chaque ski. En effet, les skis ne sont pas constamment parallèles, ils ne se déplacent pas toujours exactement à la même vitesse. On pourra ainsi connaître les différences de vitesse pendant les différentes phases d'un virage par exemple.

Contrairement au dispositif du brevet allemand DE 195 24 842 A1 susmentionné qui mesure à un instant donné, par l'intermédiaire de deux capteurs, la luminance moyenne réfléchie par respectivement deux zones distinctes de la surface de neige visible dans une fenêtre d'observation prévue sous le ski, le dispositif de la présente invention prend une seule image de l'ensemble de la surface sous la fenêtre d'observation. Ainsi, au lieu d'analyser deux séries de valeurs de luminances moyennes reçues séquentiellement par deux capteurs et correspondant à des luminances réfléchies par respectivement deux séries de zones approximativement identiques de la surface de la neige, le dispositif de la présente invention analyse uniquement deux images consécutives très détaillées de toute la surface sous la fenêtre d'observation. La précision des motifs apparaissant sur l'image prise par le dispositif de la présente invention permet d'obtenir une meilleure précision sur le calcul de la vitesse.

De plus, dans le cas où le ski ne fait que déraper sans avancer ou en avançant très lentement, le dispositif du brevet allemand s'appuyant sur les mesures de luminance effectuées par deux capteurs placés dans l'axe du ski est mis en défaut. De même, le dispositif dudit brevet allemand est susceptible de ne pas fonctionner dans le cas où les deux capteurs ne voient pas des zones adjacentes et où le ski dérape, les valeurs de luminance relevées séquentiellement pouvant être totalement différentes.

Bien entendu, la présente invention est susceptible de diverses variantes et modifications qui apparaîtront à l'homme de l'art. En particulier, les supports de communication entre les différents dispositifs peuvent être n'importe quel support de communication connu. De plus, le dispositif de mesure de déplacement pourrait être positionné ailleurs que dans le ski, par exemple être lié aux fixations du ski.

En outre, dans le cas où plusieurs capteurs sont placés sur un même ski, ils ne sont pas nécessairement placés en vis-à-vis mais peuvent être répartis entre l'avant et l'arrière du ski.

Dans le cas d'une installation disposée en partie sur le ski, en partie sur un objet portable et en partie dans une station à distance, on pourra répartir de diverses façons les éléments constitutifs de l'invention. Le calcul de vitesse pourra être fait à n'importe lequel des trois emplacements. Il pourra aussi être fait indépendamment en plusieurs des trois emplacements. Des moyens d'émission-réception pourront être prévus au niveau de deux ou trois emplacements, etc.

Le dispositif précédemment décrit concerne un ski mais il s'applique tout aussi bien à une luge, des patins, un surf, un bobsleigh ou de façon générale à tout objet pouvant glisser sur de la neige ou de la glace.

## Revendications

1. Système de mesure de la vitesse d'un objet glissant sur la neige ou la glace tel qu'un ski comprenant:
des premier et second dispositifs placés de chaque côté de l'objet glissant aptes à prendre des images successives de la surface défilant sous l'objet glissant, constituée de la surface de la neige ou de la surface supérieure d'un ensemble de particules de neige en suspension projetées sous l'objet glissant,
un moyen de mesure de déplacement par comparaison entre des images successives associé à chacun desdits premier et second dispositifs, et
des moyens de calcul de la vitesse à partir des déplacements mesurés par les moyens de mesure de déplacement.

2. Système selon la revendication 1, dans lequel les moyens de mesure de déplacement identifient des motifs similaires entre deux images successives, déterminent le décalage du motif entre les deux images, et calculent le déplacement de l'objet glissant en appliquant un coefficient de proportionnalité prédéfini.

3. Système selon la revendication 1 ou 2, comprenant pour chacun des moyens de mesure un moyen de détermination des vitesses longitudinale et transversale.

4. Système selon la revendication 3, dans lequel les moyens de calcul indiquent comme vitesse de l'objet glissant la vitesse longitudinale la plus élevée parmi les vitesses longitudinales indiquées par les moyens de détermination des vitesses longitudinale et transversale.

5. Système selon la revendication 4, dans lequel un dispositif d'analyse détermine, à partir des variations temporelles des vitesses longitudinales et transversales, les moments où l'objet glissant dérape.

6. Système selon la revendication 1, dans lequel les moyens de mesure de déplacement comprennent un dispositif d'éclairage (9) illuminant la surface sous l'objet glissant (10) afin d'en faire l'image sur un photorécepteur (12), le dispositif d'éclairage faisant partie d'un bloc cylindrique insérable dans l'objet glissant et incorporant le photorécepteur et un composant de calcul de vecteurs de déplacement associé au photorécepteur.

7. Système selon la revendication 1, comprenant des dispositifs d'alarme et/ou d'affichage.

8. Système selon la revendication 1, comprenant des moyens de mémorisation et d'analyse des déplacements et/ou des vitesses calculés.

9. Système selon l'une quelconque des revendications 1 à 8, dans lequel l'objet glissant est constitué d'une paire de skis et les premier et second dispositifs sont placés d'un côté de chaque ski.

## Claims

1. A speed measurement system for an object sliding on snow or ice such as a ski containing:
first and second devices placed on each edge of the sliding object capable of taking successive images of the surface passing under the sliding object, said surface being a surface of snow or the upper surface of a mass of airborne snow particles projected under the sliding object,
measuring means for measuring displacement by comparing successive images associated with each of said first and second devices, and
calculating means for calculating speed based on the displacement measured by the displacement measurements means.

2. The system of claim 1, wherein said measuring means identifies similar patterns in two successive images, determines the shift of the pattern between the two images, and calculates the displacement of the sliding object in applying a predefined scaling factor.

3. The system of claim 1 or 2, containing for each measuring means, determination means for determining the longitudinal and lateral speeds.

4. The system of claim 3, wherein the calculating means indicate the speed of the sliding object as the greater longitudinal speed among the longitudinal speeds computed by the determination means.

5. The system of claim 4, wherein an analysis device determines, based on temporal variations of the longitudinal and lateral speeds, the moment when the sliding object starts skidding.

6. The system of claim 1, wherein the measuring means contains a source of illumination (9) lighting the surface under the sliding object (10) in order to take an image with a light sensitive sensor (12), the source of illumination being part of a cylindrical block inserted in the sliding object and incorporating the light sensitive sensor and a component for calculating the displacement vectors associated with the light sensitive sensor.

7. The system of claim 1, containing an alarm and/or a display.

8. The system of claim 1, containing means for recording and analyzing the displacements and/or calculated speeds.

9. The system of any of claims 1 to 8, wherein the sliding object is a pair of skis and the first and second devices are placed on an edge of each ski.

## Patentansprüche

1. Ein Geschwindigkeitsmesssystem für einen Gegenstand, der auf Schnee oder Eis gleitet, wie beispielsweise ein Ski, wobei das System folgendes aufweist:
erste und zweite Vorrichtungen, die an jeder Kante des gleitenden Objekts platziert sind und die in der Lage sind aufeinanderfolgende Abbilder der Oberfläche aufzunehmen, die unter dem gleitenden Objekt hindurchläuft, wobei die Oberfläche von Schnee oder die Oberfläche einer in die Luft gewirbelten Masse von Schneepartikeln ist, welche unter dem gleitenden Objekt vorragen,
Messmittel zum Messen eines Versatzes durch Vergleichen aufeinanderfolgender Bilder, die mit jeder der ersten und zweiten Vorrichtungen assoziiert ist, und
Berechnungsmittel zum Berechnen der Geschwindigkeit basierend auf dem Versatz, der durch die Versatzmessmittel gemessen wurde.

2. System nach Anspruch 1, wobei die Messmittel gleiche Muster in zwei aufeinanderfolgenden Bildern identifizieren, die Verschiebung der Muster zwischen den zwei Bilder bestimmen und den Versatz des Gleitobjekts berechnen durch Anlegen eines vordefinierten Skalierfaktors.

3. System nach Anspruch 1 oder 2, dass für jedes Messmittel Bestimmungsmittel aufweist zum Bestimmen der Längs- und Seitengeschwindigkeiten.

4. System nach Anspruch 3, wobei die Berechnungsmittel die Geschwindigkeit des Gleitobjekts als die größere Längsgeschwindigkeit unter den Längsgeschwindigkeiten anzeigt, welche durch die Bestimmungsmittel berechnet wurden.

5. System nach Anspruch 4, wobei eine Analysevorrichtung basierend auf zeitlichen Variationen der Längs und Seitengeschwindigkeiten den Moment bestimmt, wenn das Gleitobjekt beginnt zu rutschen.

6. System nach Anspruch 1, wobei die Messmittel eine Beleuchtungsquelle (9) aufweisen, welche die Oberfläche unter dem Gleitobjekt (10) beleuchten, um die Aufnahme eines Bildes mit einem lichtempfindlichen Sensor (12) zu ermöglichen, wobei die Beleuchtungsquelle Teil eines zylindrischen Blocks ist, der in das Gleitobjekt eingeführt ist, und den lichtempfindlichen Sensor und eine Komponente zum Berechnen der Versatzvektoren, die mit dem lichtempfindlichen Sensor assoziiert sind, aufweist.

7. System nach Anspruch 1, dass ferner einen Alarm und/oder eine Anzeige aufweist.

8. System nach Anspruch 1, dass Mittel aufweist zum Aufzeichnen und Analysieren der Versätze und/oder berechneten Geschwindigkeiten.

9. System nach einem der Ansprüche 1 bis 8, wobei das Gleitobjekt ein Paar Skier ist und die ersten und zweiten Vorrichtungen an einer Kante jedes Skis platziert sind.
